(19) **Europäisches Patentamt**

**European Patent Office**

**Office européen des brevets**

(11) **EP 1 487 271 B1**

(12) **EUROPEAN PATENT SPECIFICATION**

(45) Date of publication and mention
of the grant of the patent:
**30.08.2006 Bulletin 2006/35**

(51) Int Cl.:
*A01N 43/78* (2006.01)

(86) International application number:
**PCT/EP2003/003193**

(21) Application number: **03722362.5**

(22) Date of filing: **21.03.2003**

(87) International publication number:
**WO 2003/079790 (02.10.2003 Gazette 2003/40)**

(54) **COMPOSITIONS WITH A BIOSTIMULATING ACTIVITY**

ZUSAMMENSETZUNGEN MIT BIOSTIMULIERENDER WIRKSAMKEIT

COMPOSITIONS A ACTIVITE BIOSTIMULANTE

(84) Designated Contracting States:
**AT BE BG CH CY CZ DE DK EE ES FI FR GB GR
HU IE IT LI LU MC NL PT RO SE SI SK TR**

(30) Priority: **26.03.2002 IT MI20020624**

(43) Date of publication of application:
**22.12.2004 Bulletin 2004/52**

(73) Proprietor: **ISAGRO S.p.A.**
**20124 Milano (IT)**

(72) Inventors:
• **BONFIGLIOLI, Mauro**
**I-47020 Longiano-Forli' (IT)**
• **FILIPPINI, Lucio**
**I-20097 San Donato Milanese (IT)**

(74) Representative: **De Gregori, Antonella et al**
**Ing. Barzano' & Zanardo Milano S.p.A.**
**Via Borgonuovo 10**
**20121 Milano (IT)**

(56) References cited:
**EP-A- 0 078 514**

• **DATABASE CA [Online] CHEMICAL ABSTRACTS
SERVICE, COLUMBUS, OHIO, US; YAMAMURA,
SABURO: "Growth promoter composition for
sugar beets and sugarcane" retrieved from STN
Database accession no. 105:166894
XP002243348 & JP 61 100504 A (HOKKO
CHEMICAL INDUSTRY CO., LTD., JAPAN) 19 May
1986 (1986-05-19)**
• **DATABASE CABA [Online] LOVATO, L. A.:
"Biostimulant for an irrigated rice crop
Bioestimulante para a cultura do arroz irrigado"
retrieved from STN Database accession no. 81:
44710 XP002243349 & ANAIS, VII REUNIAO DA
CULTURA DO ARROZ, RIO GRANDE DO SUL, PP.
157-158. PUBLISHER: EMPRESA BRASILEIRA
DE PESQUISA AGROPECUARIA. PELOTAS,
Instituto Rio Grandense do Arroz, Porto Alegre
90.000, Rio Grande do Sul, Brazil.**

**Description**

COMPOSITIONS WITH A BIOSTIMULATING ACTIVITY

The present invention relates to compositions with a biostimulating activity and their agronomic use.

It has been known for some time that R-(-)-thiazolidine-4-carboxylic acid [CAS 34592-47-7] (hereafter also indicated as ATC) and some of its derivatives, in particular, N-acetylthiazolidine-4-carboxylic acid [CAS 5025-82-1] (hereafter also indicated as AATC) are used singly as components of compositions with a biostimulating activity to re-establish the correct physiological equilibrium of plants subject to various kinds of abiotic or biotic stress.

Different kinds of stress can be caused, for example, by cold, heat, drought, or by exogenous chemical agents such as herbicidal compounds, fungicidal compounds or insecticides, or other kinds of stress can be caused by specific development phases of the vegetables themselves which create particular energy consumption, such as allegation, blossoming, fruit enlargement, etc. JP 61100504 discloses a growth promoter composition containing 3-acetyl-4-thiazolidinecarboxylic acid (AATC) and folic acid. The article "Biostimulant for an irrigated rice crop" (Lovato et al. Anais, VII Reuniao da Coltura do Arroz, Rio Grande do Sul, pp.157-158) discloses the use of Ergostin, a growth stimulator containing AATC, folic acid, additive and stabilizer, as biostimulant for an irrigated rice crop.

EP 0078514 discloses compositions comprising AATC or thiazolidine-4-carboxylic acid (ATC) and folic acid as biostimulating compositions for plants.

The Applicant has surprisingly found that, by applying compositions with a biostimulating activity consisting of thiazolidine-4-carboxylic acid mixed with N-acyl derivatives of said thiazolidine-4-carboxylic acid, there is a synergic activity between these compounds.

The Applicant has also surprisingly found that, by applying compositions with a biostimulating activity consisting of thiazolidine-4-carboxylic acid and/or an N-acyl derivative of thiazolidine-4-carboxylic acid and/or an amino acid component consisting of one or more essential amino acids, there is an amplification of the biostimulating effect of the above composition, or a synergic activity when said amino acid component proves to have a biostimulating activity.

An object of the present invention therefore relates to compositions comprising at least two components selected from thiazolidine-4-carboxylic acid, an N-acyl derivative of thiazolidine-4-carboxylic acid and an amino acid component, the amino acid component being selected from proline, glutamic acid, glutamine and/or hydrolized proteininc products obtained from natural substances.

A further object of the present invention relates to the use of compositions comprising at least two components selected from thiazolidine-4-carboxylic acid, an N-acyl derivative of thiazolidine-4-carboxylic acid and an amino acid component, the amino acid component being selected from proline, glutamic acid, glutamine and/or hydrolized proteininc products obtained from natural substances as biostimulants in the agronomic field.

In particular, the N-acyl derivative of thiazolidine-4-carboxylic acid is preferably selected from N-acetyl-thiazolidine-4-carboxylic acid, N-propanoyl-thiazolidine-4-carboxylic acid or N-butanoyl-thiazolid-ine-4-carboxylic acid.

Preferred compositions according to the present invention comprise thiazolidine-4-carboxylic acid and N-acetyl-thiazolidine-4-carboxylic acid or thiazolidine-4-carboxylic acid and an amino acid component, the amino acid component being selected from proline, glutamic acid, glutamine and/or hydrolized proteininc products obtained from natural substances, or N-acetyl-thiazolidine-4-carboxylic acid and an amino acid component, the amino acid component being selected from proline, glutamic acid, glutamine and/or hydrolized proteininc products obtained from natural substances.

A further preferred composition according to the present invention comprises thiazolidine-4-carboxylic acid and N-acetyl-thiazolidine-4-carboxylic acid and an amino acid component, the amino acid component being selected from proline, glutamic acid, glutamine and/or hydrolized proteininc products obtained from natural substances.

The N-acyl derivatives of thiazolidine-4-carboxylic acid can be present in acid form or in salified form such as salts of sodium, potassium, magnesium, copper, iron, manganese, calcium, or of another inorganic cation.

Furthermore, the N-acyl derivatives of thiazolidine-4-carboxylic acid can be present in salified form such as ammonium salts, or salified with an organic amine, such as triethylamine, cyclohexylamine, trimethylamine, triethanolamine, or with an amine group of a basic amino acid such as Glutamic acid, or ornithine.

The amino acid component consisting of one or more essential amino acids is selected from proline and/or glutamic acid and/or glutamine. In particular the proline and/or glutamic acid and/or glutamine can be in purified form or as complex mixtures.

The amino acid components can consist of amino acids in purified form or consist of complex mixtures deriving from partial or total hydrolysis of biological matrixes containing protein fractions.

These amino acids or mixtures of essential amino acids can therefore be free amino acids or proteinic amino acids, which, within the context of the present invention, are considered as being precursors of free amino acids.

Said proteinic amino acids can consequently be incorporated in dipeptides, tripeptides or oligopeptides or peptides with different molecular weights.

The amino acid component according to the present invention consist of hydrolyzed proteinic products obtained from natural substrates.

These hydrolyzed products can have varying degrees of hydrolysis and will therefore have free amino acids and/or dipeptides, tripeptides or oligopeptides with varying molecular weights. Said hydrolyzed proteinic products preferably contain at least 5% of free amino acids with respect to the total amino acid content, and will preferably have an overall minimum content of total amino acids (free or proteinic) of 25% w/w.

The hydrolyzed proteinic products are preferably hydrolyzed proteinic products of bovine epithelium or vegetable matrixes.

Said hydrolyzed product will preferably contain essential amino acids, such as proline, glutamic acid or glutamate, or glutamine and can have its own biostimulating activity on numerous crops of economic interest.

The use of the composition according to the present invention is particularly advantageous specifically as a result of the synergic effect observed in the application of the compositions with a biostimulating activity comprising at least two components selected from thiazolidine-4-carboxylic acid, an N-acyl derivative of thiazolidine-4-carboxylic acid and an amino acid component, the amino acid component being selected from proline, glutamic acid, glutamine and/or hydrolized proteininc products obtained from natural substances, when said amino acid component proves to have its own biostimulating activity.

A further advantage consists in the amplification of the biostimulating effect observed in the application of the compositions with a biostimulating activity comprising at least two components selected from thiazolidine-4-carboxylic acid, an N-acyl derivative of thiazolidine-4-carboxylic acid and an amino acid component the amino acid component being selected from proline, glutamic acid, glutamine and/or hydrolized proteininc products obtained from natural substances, when said amino acid component does not have its own biostimulating activity. In agronomic practice, the compositions object of the present invention can conveniently contain additives, dispersants, wetting agents and any other product known in the art for favouring the application of active substances to vegetables.

An object of the present invention therefore also relates to a method for the biostimulation of agricultural crops by the application of the compositions according to the present invention, alone or with other compounds having the same or a different activity.

The application of the compositions object of the present invention is effected on the whole plant or a part of it, by application on the aerial part and/or on the hypogeum, for example by dispersion or spraying, on the leaves or via the roots.

Said thiazolidine-4-carboxylic and N-acyl-thiazolidine-4-carboxylic acids and the amino acid components are generally commercial products easily available on the market. The hydrolyzed proteinic product from bovine epithelium, sold in Italy and in many other countries in the world under the trade mark of Siapton® and the hydrolyzed product based on vegetables (soybean) called Fertimin® are examples of a complex amino acid mixture.

The following examples are provided for merely illustrative purpose and in no way intend to limit the scope of the present invention. In the following examples the synergic effect of the components of the mixture is revealed by comparing the experimental data with the theoretical efficacy of the mixture, object of the invention, calculated according to the Limpel formula ("Pesticide Science" (1987), vol. 19, pages 309-315):

$$E = x + y - (xy/100)$$

wherein :

- E is the biological activity expected, in the absence of synergic effects, from a mixture obtained by mixing x g of compound X with y g of compound Y;
- x is the activity of the compound X when used alone at a dose of x g;
- y is the activity of the compound Y when used alone at a dose of y g.

When the biological activity experimentally found is higher than the value of E, said activity should be considered as a synergic effect.

EXAMPLE 1

Preparation of compound with a biostimulating activity for the subsequent experiments.

An amount of 50 g of each compound under examination (thiazolidine-4-carboxylic acid (compound I) and N-acyl-thiazolidine-4-carboxylic acid (compound II)) were dispersed in water (800 cc) and vigorously stirred. An excess of 5%, with respect to the stoichiometric quantity, of sodium bicarbonate, was then added in portions. 150 g of a non-ionic surface-active agent were added to favour application to the leaves. The whole mixture was brought to a volume of 1 liter by the addition of water, in order to obtain solutions of each compound with a concentration of 50 g/liter.

EXAMPLE 2

Assessment of the biostimulating activity of compound (I), compound (II) and their synergic mixture.
Seedlings of courgettes cv. Diamone, sown and cultivated in a hot greenhouse, were transplanted in a field (May 11, Leggiuno, (Varese) - Italy).
The theses were randomly arranged in lots with four repetitions for each thesis. Each lot consisted of six plants in rows situated at a distance of 1 meter from each other, and at a distance of 1 meter from each other in the same row.
Weeding was performed before the transplant, using 1 kg/ha of trifluralin (volume 550 l/ha).
At the moment transplanting, the seedlings have a common degree of vegetative development.
In order to minimize transplant stress, the seedlings planted were treated respectively with:

Thesis A : with compound (I) (ATC) at a dose of 5 g/hl;
Thesis B : with compound (I) (ATC) at a dose of 10 g/hl;
Thesis C : with compound (II) (AATC) at a dose of 5 g/hl;
Thesis D : with compound (II) (AATC) at a dose of 10 g/hl;
Thesis E : with compound (I) (ATC) at a dose of 5 g/hl in a mixture with compound (II) (AATC) at a dose of 5 g/hl;
Thesis F : no biostimulating treatment.

Said treatment was subsequently repeated every 10 days, in a preventive manner, in order to oppose any possible thermal or water stress or stress due to vegetative development.
Harvesting was effected from June 11 to August 27, and the yield increases indicated in Table 1, were registered in the treated theses (A, B, C, D, E), with respect to the non-treated Thesis F. The yields are obtained from the average amount of fruit obtained in each lot during the above-mentioned harvesting period (June 11 - August 27).

Table 1

| | THESIS | | | | | |
|---|---|---|---|---|---|---|
| | A (5 g ATC/h) | B (10 g ATC/hl) | C (5 g AATC/hl) | D (10 g AATC/hl) | E (5 g AATC/hl + 5 g ATC/hl) | F (not treated) |
| Fruit per lot | 100 | 105 | 102 | 109 | 115 | 97 |
| Increase (%) | +3.1% | + 8.2 % | + 5.2 % | +12.4% | +18.6% | --- |

From the experimental results obtained, the expected activity (E) for the mixture of 5 g of compound I plus 5 g of compound II (Thesis E), calculated by applying to said experimental results the above-mentioned Limpel formula, is:

$$E = (3.1+8.2) - (3.1 \bullet 8.2)/100 = 11\%$$

The ratio between the experimental data and the expected activity proves to be higher than 1, indicating a synergy of effects:

$$18.6/11 = 1.69$$

EXAMPLE 3

Determination of the amplification of the biostimulating effect obtained by applying compound (I) in the presence of a solution of proline.
Seedlings of peppers cv. Pathos were transplanted in a tunnel (April 16, AT).
The lots were distributed according to the random block scheme with 5 repetitions per thesis. Each repetition consisted of 15 plants.

At the moment of transplanting, the seedlings have a common degree of vegetative development.

In order to minimize transplant stress, the seedlings planted were treated respectively with:

Thesis A : with compound (I) (ATC) at a dose of 10 g/hl;
Thesis B : with compound (I) (ATC) at a dose of 10 g/hl, an aqueous solution of proline at a dose of 100 g/hl;
Thesis C : with compound (II) (AATC) at a dose of 10 g/hl;
Thesis D : with compound (II) (AATC) at a dose of 10 g/hl, an aqueous solution of proline at a dose of 100 g/hl;
Thesis E : no biostimulating treatment.

Said treatment was subsequently repeated every 10 days, in a preventive manner, in order to oppose any possible thermal or water stress or stress due to vegetative development.

Harvesting was effected from July 29 for the following 30 days, and a production increase was registered in theses B and D, with respect to theses A and C, as indicated in Table 2. The yields are obtained from the average production obtained during the above harvesting period (July 29 - August 29).

Table 2

| | THESIS | | | | |
|---|---|---|---|---|---|
| | A (10 g ATC/hl) | B (10 g ATC/hl + 100 g Proline/hl) | C (10 g AATC/hl) | D (10 g AATC/hl + 100 g Proline/hl) | E (not treated) |
| Berries kg per lot | 25.80 | 27.80 | 26.40 | 28.20 | 24.70 |
| Increase (%) | +4.5% | +12.6% | +6.9% | +17.0% | -- |

As it is known that the proline solutions do not have their own biostimulating activity, this amplification is attributed to a synergic interaction of the proline itself on the biostimulating activity of compounds (I) and (II).

## EXAMPLE 4

Determination of the synergic effect obtained in the application of a mixture based on compound (I) and compound (II) to which a mixture is added, containing essential amino acids, consisting of a hydrolyzed proteinic product obtained from bovine epithelium, with a known biostimulating activity.

Tomato seedlings cv. Arletta, sown and cultivated in a greenhouse, were transplanted in a field (May 11, Leggiuno (VA)- Italy), after weeding with trifluralin (1 kg/ha).

The theses were arranged in random blocks. Each lot consisted of 10 plants at a distance of 50 cm from each other in rows 80 cm apart.

At the moment of transplanting, the seedlings have a common degree of vegetative development.

In order to minimize transplant stress, the seedlings planted were treated respectively with:

Thesis A : with compound (I) (ATC) at a dose of 5 g/hl mixed with compound (II) (AATC) at a dose of 5 g/hl;
Thesis B : with a hydrolyzed proteinic product of an animal origin (compound III), at a dose of 500 g/hl;
Thesis C : with compound (I) (ATC) at a dose of 5 g/hl mixed with compound (II) (AATC) at a dose of 5 g/hl mixed with a hydrolysed proteinic product (compound III) at a dose of 500 g/hl;
Thesis D : no biostimulating treatment.

Said treatment was subsequently repeated every 15 days, in a preventive manner, in order to oppose any possible thermal or water stress or stress due to vegetative development.

In particular, the compound (III) used in this test, for the sole and non-limiting purpose of illustrating the behaviour of a hydrolyzed proteinic product, is a sample of Siapton®, a hydrolyzed product of bovine epithelium, characterized by an overall content of about 700 g of amino acids (free and proteinic) per liter of solution, of which about 13% w/w consists of proline, about 12% of glutamic acid, about 9.5% of 4-hydroxyproline.

Harvesting was effected from July 16 to September 9, and the yield increases indicated in Table 3, were registered in the theses treated (A, B, C) with respect to the non-treated Theses D. The yields are obtained from the average amount and average weight of the fruit obtained per lot, during the above harvesting period (July 16 - September 9).

Table 3

| | THESIS | | | | |
|---|---|---|---|---|---|
| | A (5 g AATC/hl + 5 g ATC/hl) | B Compound III (XX g/hl) | C (5g AATC/hl + 5g ATC/hl) + Compound III (500 g/hl) | C Expected Activity according to Limpel | D (not treated) |
| Berries per lot | 178 | 173 | 193 | | 161 |
| Increase (%) | +10.6 % | +7.5 % | + 19.9 % | + 18.0 % | --- |
| Berries kg/lot | 22.10 | 21.40 | 25.10 | | 18.60 |
| Increase (%) | +18.8% | +15.1% | +34.9% | +33.8% | -- |

The expected values applying the Limpel formula are lower than those obtained experimentally showing a synergy of effects.

EXAMPLE 5

Determination of the synergic effect obtained in the application of a mixture based on compound (I) and compound (II) to which a mixture is added, containing essential amino acids, consisting of a hydrolyzed proteinic product of a vegetable origin (compound IV).

Aubergine seedlings cv. Violetta Lunga, sown and cultivated in a hot greenhouse, were transplanted in the middle of a field on May 14 (Leggiuno (VA)- Italy), after weeding with trifluralin (1 kg/ha).

The theses were distributed according to 5 random blocks. Each lot consisted of 8 plants at a distance of 40 cm from each other on each row. The distance between the rows was 1 m.

At the moment of transplanting, the seedlings have a common degree of vegetative development.

In order to minimize transplant stress, the seedlings planted were treated respectively with:

Thesis A : with compound (I) (ATC) at a dose of 5 g/hl mixed with compound (II) (AATC) at a dose of 5 g/hl;
Thesis B : with a hydrolyzed proteinic product (compound IV) with a minimum content of proline of 1.5% (meaning overall free or proteinic proline) at a dose of 900 g/hl;
Thesis C : with compound (I) (ATC) at a dose of 5 g/hl mixed with compound (II) (AATC) at a dose of 5 g/hl mixed with a hydrolysed proteinic product (compound IV) at a dose of 600 g/hl;
Thesis D : no biostimulating treatment.

Said treatment was subsequently repeated every 10 days, in a preventive manner, in order to oppose any possible thermal or water stress or stress due to vegetative development.

In particular, the compound (IV) used in this test, for the sole and non-limiting purpose of illustrating the behaviour of a hydrolyzed proteinic product, is a hydrolyzed proteinic product obtained from soybean and characterized by a minimum content of proline of about 1.5%, a minimum content of glutamic acid of about 5% and the total absence of 4-hydroxyproline.

Harvesting was effected from August 1 to September 12, and the yield increases indicated in Table 4, were registered in the theses treated (A, B, C) with respect to the non-treated Theses D. The yields are obtained from the average amount of fruit obtained for each lot, during the above harvesting period (August 1 - September 12).

Table 4

| | THESIS | | | | |
|---|---|---|---|---|---|
| | A (5 g AATC/hl + 5 g ATC/hl) | B Compound IV (600 g/hl) | C (5g AATC/hl + 5 g ATC/hl) + Compound IV (600 g/ha) | C Expected Activity according to Limpel | D (not treated) |
| Berries per lot | 28.1 | 26.7 | 30.4 | | 25.8 |

(continued)

| | THESIS | | | | |
|---|---|---|---|---|---|
| | A (5 g AATC/hl + 5 g ATC/hl) | B Compound IV (600 g/hl) | C (5g AATC/hl + 5 g ATC/hl) + Compound IV (600 g/ha) | C Expected Activity according to Limpel | D (not treated) |
| Increase (%) | +8.9% | + 3.5 % | + 17.8 % | + 12.4 % | --- |

The expected values applying the Limpel formula are lower than those obtained experimentally showing a synergy of effects.

**Claims**

1. Compositions comprising at least two components selected from thiazolidine-4-carboxylic acid, an N-acyl derivative of thiazolidine-4-carboxylic acid and an amino acid component, **characterised in that** the amino acid component is selected from proline, glutamic acid, glutamine and/or hydrolyzed proteinic products obtained from natural substrates.

2. The compositions according to claim 1, **characterized in that** the N-acyl derivative of thiazolidine-4-carboxylic acid is selected from N-acetyl-thiazolidine-4-carboxylic acid, N-propanoyl-thiazolidine-4-carboxylic acid or N-butanoyl-thiazolidine-4-carboxylic acid.

3. The compositions according to claim 1, **characterized in that** they comprise thiazolidine-4-carboxylic acid and N-acetyl-thiazolidine-4-carboxylic acid.

4. The compositions according to claim 1, **characterized in that** they comprise thiazolidine-4-carboxylic acid and an amino acid component selected from proline, glutamic acid, glutamine and/or hydrolyzed proteinic products obtained from natural substrates.

5. The compositions according to claim 1, **characterized in that** they comprise N-acetyl-thiazolidine-4-carboxylic acid and an amino acid component selected from proline, glutamic acid, glutamine and/or hydrolyzed proteinic products obtained from natural substrates.

6. The compositions according to claim 1, **characterized in that** they comprise thiazolidine-4-carboxylic acid, N-acetyl-thiazolidine-4-carboxylic acid and an amino acid component selected from proline, glutamic acid, glutamine and/or hydrolyzed proteinic products obtained from natural substrates.

7. The compositions according to claim 1, **characterized in that** the N-acyl derivatives of thiazolidine-4-carboxylic acid are present in acid form or in salified form.

8. The compositions according to claim 7, **characterized in that** the N-acyl derivatives of thiazolidine-4-carboxylic acid are present in salified form as salts of sodium, potassium, magnesium, copper, iron, manganese, calcium, or another inorganic cation.

9. The compositions according to claim 7, **characterized in that** the N-acyl derivatives of thiazolidine-4-carboxylic acid are present in salified form as ammonium salts, or salified with an organic amine such as triethylamine, cyclohexylamine, trimethylamine, triethanolamine, or with the amine group of a basic amino acid such as glutamic acid or ornithine.

10. The compositions according to claim 1, **characterized in that** the amino acid component is selected from proline and/or glutamic acid and/or glutamine.

11. The compositions according to claim 10, **characterized in that** proline and/or glutamic acid and/or glutamine are in purified form or are complex mixtures.

**12.** The compositions according to claim 1, **characterized in that** the amino acid component consists of hydrolyzed proteinic products obtained from natural substrates.

**13.** The compositions according to claim 12 **characterized in that** the hydrolyzed proteinic products contain at least 5% of free amino acids with respect to the total content of amino acids.

**14.** The compositions according to claim 12, **characterized in that** the hydrolyzed proteinic products have an overall minimum content of total amino acids (free or proteinic) of 25% w/w.

**15.** The compositions according to claim 12, **characterized in that** the hydrolyzed proteinic products are hydrolyzed proteinic products of bovine epithelium.

**16.** The compositions according to claim 12, **characterized in that** the hydrolyzed proteinic products are hydrolyzed proteinic products of vegetable matrixes.

**17.** The compositions according to any of the previous claims, **characterized in that** they comprise further additives, dispersants and/or wetting agents.

**18.** A method for biostimulating agricultural crops by the application of the compositions according to one of the claims 1-17 alone or with other compounds having an analogous or different activity.

**19.** The method according to claim 18 **characterized in that** the application takes place on the whole plant or on a part of the plant, by means of applications on the aerial part and/or on the hypogeum, for example, by dispersion or spraying, either on the leaves or via the roots.

**20.** Use of the compositions according to any of the claims from 1 to 17, as biostimulants in the agronomic field.

**Patentansprüche**

**1.** Zusammensetzungen, umfassend mindestens zwei Komponenten, gewählt aus Thiazolidin-4-carbonsäure, einem N-Acylderivat von Thiazolidin-4-carbonsäure und einer Aminosäurekomponente, **dadurch gekennzeichnet, dass** die Aminosäurekomponente gewählt ist aus Prolin, Glutaminsäure, Glutamin und/oder hydrolysierten proteinartigen Produkten, die aus natürlichen Substraten erhalten werden.

**2.** Zusammensetzungen nach Anspruch 1, **dadurch gekennzeichnet, dass** das N-Acylderivat von Thiazolidin-4-carbonsäure gewählt ist aus N-Acetyl-thiazolidin-4-carbonsäure, N-Propanoyl-thiazolidin-4-carbonsäure oder N-Butanoyl-thiazolidin-4-carbonsäure.

**3.** Zusammensetzungen nach Anspruch 1, **dadurch gekennzeichnet, dass** sie Thiazolidin-4-carbonsäure und N-Acetyl-thiazolidin-4-carbonsäure umfassen.

**4.** Zusammensetzungen nach Anspruch 1, **dadurch gekennzeichnet, dass** sie Thiazolidin-4-carbonsäure und eine Aminosäurekomponente, gewählt aus Prolin, Glutaminsäure, Glutamin und/oder hydrolysierten proteinartigen Produkten, die aus natürlichen Substraten erhalten werden, umfassen.

**5.** Zusammensetzungen nach Anspruch 1, **dadurch gekennzeichnet, dass** sie N-Acetyl-thiazolidin-4-carbonsäure und eine Aminosäurekomponente, gewählt aus Prolin, Glutaminsäure, Glutamin und/oder hydrolysierten proteinartigen Produkten, die aus natürlichen Substraten erhalten werden, umfassen.

**6.** Zusammensetzungen nach Anspruch 1, **dadurch gekennzeichnet, dass** sie Thiazolidin-4-carbonsäure, N-Acetyl-thiazolidin-4-carbonsäure und eine Aminosäurekomponente, gewählt aus Prolin, Glutaminsäure, Glutamin und/oder hydrolysierten proteinartigen Produkten, die aus natürlichen Substraten erhalten werden, umfassen.

**7.** Zusammensetzungen nach Anspruch 1, **dadurch gekennzeichnet, dass** die N-Acylderivate von Thiazolidin-4-carbonsäure in Säureform oder in einer zu Salz gebildeten Form vorliegen.

**8.** Zusammensetzungen nach Anspruch 7, **dadurch gekennzeichnet, dass** die N-Acylderivate von Thiazolidin-4-carbonsäure in einer zu Salz gebildeten Form als Salze von Natrium, Kalium, Magnesium, Kupfer, Eisen, Mangan, Calcium oder einem anderen anorganischen Kation vorliegen.

9. Zusammensetzungen nach Anspruch 7, **dadurch gekennzeichnet, dass** die N-Acylderivate von Thiazolidin-4-carbonsäure in einer zu Salz gebildeten Form als Ammoniumsalze vorliegen oder zu einem Salz gebildet mit einem organischen Amin, wie Triethylamin, Cyclohexylamin, Trimethylamin, Triethanolamin, oder mit der Amingruppe einer basischen Aminosäure, wie Glutaminsäure oder Ornithin.

10. Zusammensetzungen nach Anspruch 1, **dadurch gekennzeichnet, dass** die Aminosäurekomponente gewählt ist aus Prolin und/oder Glutaminsäure und/oder Glutamin.

11. Zusammensetzungen nach Anspruch 10, **dadurch gekennzeichnet, dass** Prolin und/oder Glutaminsäure und/ oder Glutamin in einer gereinigten Form vorliegen oder komplexe Mischungen sind.

12. Zusammensetzungen nach Anspruch 1, **dadurch gekennzeichnet, dass** die Aminosäurekomponente aus hydrolysierten proteinartigen Produkten besteht, die aus natürlichen Substraten erhalten werden.

13. Zusammensetzungen nach Anspruch 12, **dadurch gekennzeichnet, dass** die hydrolysierten proteinartigen Produkte mindestens 5 % freie Aminosäuren bezüglich des Gesamtgehalts an Aminosäuren enthalten.

14. Zusammensetzungen nach Anspruch 12, **dadurch gekennzeichnet, dass** die hydrolysierten proteinartigen Produkte einen Gesamtmindestgehalt der gesamten Aminosäuren (frei oder proteinartig) von 25 % w/w besitzen.

15. Zusammensetzungen nach Anspruch 12, **dadurch gekennzeichnet, dass** die hydrolysierten proteinartigen Produkte hydrolysierte proteinartigen Produkte von Rinder-Epithelium sind.

16. Zusammensetzungen nach Anspruch 12, **dadurch gekennzeichnet, dass** die hydrolysierten proteinartigen Produkte hydrolysierte proteinartigen Produkte von pflanzlichen Matrices sind.

17. Zusammensetzungen nach mindestens einem der vorausgehenden Ansprüche, **dadurch gekennzeichnet, dass** sie weitere Additive, Dispergiermittel und/oder Benetzungsmittel umfassen.

18. Verfahren zur Biostimulierung landwirtschaftlicher Feldfrüchte durch die Aufbringung der Zusammensetzungen gemäß einem der Ansprüche 1 - 17, allein oder mit anderen Verbindungen mit einer analogen oder unterschiedlichen Aktivität.

19. Verfahren nach Anspruch 18, **dadurch gekennzeichnet, dass** die Aufbringung auf der gesamten Pflanze oder auf einem Teil der Pflanze erfolgt durch Aufbringungen auf den in der Luft befindlichen Teil und/oder auf das Hypogeum, zum Beispiel durch Zerstäuben bzw. Feinverteilen oder Sprühen entweder auf die Blätter oder über die Wurzeln.

20. Verwendung der Zusammensetzungen nach mindestens einem der Ansprüche 1 bis 17 als Biostimulanzien auf dem Gebiet der Agronomie.

**Revendications**

1. Compositions comprenant au moins deux composants choisis parmi l'acide thiazolidine-4-carboxylique, un dérivé N-acylé de l'acide thiazolidine-4-carboxylique et un composant acide aminé, **caractérisées en ce que** le composant acide aminé est choisi parmi la proline, l'acide glutamique, la glutamine et/ou les produits protéiques d'hydrolyse de substrats naturels.

2. Compositions conformes à la revendication 1, **caractérisées en ce que** le dérivé N-acylé de l'acide thiazolidine-4-carboxylique est choisi parmi l'acide N-acétyl-thiazolidine-4-carboxylique, l'acide N-propanoyl-thiazolidine-4-carboxylique et l'acide N-butanoyl-thiazolidine-4-carboxylique.

3. Compositions conformes à la revendication 1, **caractérisées en ce qu'**elles contiennent de l'acide thiazolidine-4-carboxylique et de l'acide N-acétyl-thiazolidine-4-carboxylique.

**4.** Compositions conformes à la revendication 1, **caractérisées en ce qu'**elles contiennent de l'acide thiazolidine-4-carboxylique et un composant acide aminé choisi parmi la proline, l'acide glutamique, la glutamine et/ou les produits protéiques d'hydrolyse de substrats naturels.

**5.** Compositions conformes à la revendication 1, **caractérisées en ce qu'**elles contiennent de l'acide N-acétyl-thiazolidine-4-carboxylique et un composant acide aminé choisi parmi la proline, l'acide glutamique, la glutamine et/ou les produits protéiques d'hydrolyse de substrats naturels.

**6.** Compositions conformes à la revendication 1, **caractérisées en ce qu'**elles contiennent de l'acide thiazolidine-4-carboxylique, de l'acide N-acétyl-thiazolidine-4-carboxylique et un composant acide aminé choisi parmi la proline, l'acide glutamique, la glutamine et/ou les produits protéiques d'hydrolyse de substrats naturels.

**7.** Compositions conformes à la revendication 1, **caractérisées en ce que** les dérivés N-acylés de l'acide thiazolidine-4-carboxylique s'y trouvent présents sous forme acide ou sous forme salifiée.

**8.** Compositions conformes à la revendication 7, **caractérisées en ce que** les dérivés N-acylés de l'acide thiazolidine-4-carboxylique s'y trouvent présents sous forme salifiée, sous forme de sel de sodium, potassium, magnésium, cuivre, fer, manganèse ou calcium ou de sel formé avec un autre cation inorganique.

**9.** Compositions conformes à la revendication 7, **caractérisées en ce que** les dérivés N-acylés de l'acide thiazolidine-4-carboxylique s'y trouvent présents sous forme salifiée, sous forme de sel d'ammonium ou de sel formé avec une amine organique, comme la triéthylamine, la cyclohexylamine, la triméthylamine ou la triéthanolamine, ou avec un acide aminé basique, tel l'acide glutamique ou l'ornithine, grâce au groupe amino de celui-ci.

**10.** Compositions conformes à la revendication 1, **caractérisées en ce que** le composant acide aminé est choisi parmi la proline et/ou l'acide glutamique et/ou la glutamine.

**11.** Compositions conformes à la revendication 10, **caractérisées en ce que** la proline et/ou l'acide glutamique et/ou la glutamine se trouvent sous forme purifiée ou sous forme de mélanges complexes.

**12.** Compositions conformes à la revendication 1, **caractérisées en ce que** le composant acide aminé consiste en des produits protéiques d'hydrolyse de substrats naturels.

**13.** Compositions conformes à la revendication 12, **caractérisées en ce que** les produits protéiques d'hydrolyse contiennent des acides aminés libres en une quantité qui représente au moins 5 % de la quantité totale d'acides aminés.

**14.** Compositions conformes à la revendication 12, **caractérisées en ce que** les produits protéiques d'hydrolyse contiennent globalement au moins 25 % en poids d'acides aminés, libres et protéiques réunis.

**15.** Compositions conformes à la revendication 12, **caractérisées en ce que** les produits protéiques d'hydrolyse sont des produits protéiques d'hydrolyse d'épithélium de bovin.

**16.** Compositions conformes à la revendication 12, **caractérisées en ce que** les produits protéiques d'hydrolyse sont des produits protéiques d'hydrolyse de matrices végétales.

**17.** Compositions conformes à l'une des revendications précédentes, **caractérisées en ce qu'**elles contiennent en outre des adjuvants, des dispersants et/ou des agents mouillants.

**18.** Procédé de biostimulation de cultures agricoles par application d'une composition conforme à l'une des revendications 1 à 17, seule ou associée à d'autres composés dotés d'une activité analogue ou différente.

**19.** Procédé conforme à la revendication 18, **caractérisé en ce que** l'application est effectuée sur tout ou partie de la plante, sur les parties aériennes et/ou les parties hypogées, par exemple par pulvérisation ou dispersion, sur les feuilles ou par les racines.

**20.** Emploi des compositions conformes à l'une des revendications 1 à 17 en agronomie, en tant que biostimulants.